(19) Europäisches Patentamt
European Patent Office
Office européen des brevets

(11) **EP 2 267 589 A2**

(12) **EUROPEAN PATENT APPLICATION**

(43) Date of publication:
**29.12.2010 Bulletin 2010/52**

(51) Int Cl.:
**G06F 3/048** (2006.01)     **G06F 3/033** (2006.01)

(21) Application number: **10184789.5**

(22) Date of filing: **29.08.2003**

(84) Designated Contracting States:
**AT BE BG CH CY CZ DE DK EE ES FI FR GB GR HU IE IT LI LU MC NL PT RO SE SI SK TR**

(62) Document number(s) of the earlier application(s) in accordance with Art. 76 EPC:
**03818399.2 / 1 658 551**

(71) Applicant: **Nokia Corporation**
**02150 Espoo (FI)**

(72) Inventor: **Kaikuranta, Terho**
**FIN-200760, Piispanristi (FI)**

(74) Representative: **Swindell & Pearson Limited**
**48 Friar Gate**
**Derby**
**Derbyshire DE1 1GY (GB)**

Remarks:
This application was filed on 30-09-2010 as a divisional application to the application mentioned under INID code 62.

(54) **Method and device for recognizing a dual point user input on a touch based user input device**

(57)    There is disclosed a method for recognizing a dual point user input on a touch based user input device, comprising receiving a first user input to said input device relating to a first position, forming a first position signal relating to said first user input, receiving a second user input to said input device relating to a second position, forming a second position signal relating to said first input and said second input, determining on the basis of said first position signal and said second position signal, if said second user input has its source in a simultaneous dual point user input, generating a third position based on said first position and said second position, and using said first and third positions, as the coordinates of said dual point user input. Further there is provided a touch based input device controller for a touch based user input device, wherein said input device is only capable of outputting a single input position signal that depends on the actual user input, comprising, an input connectable to said touch based user input device to receive successive position signals each representing a position on said touch based user input device, which a user has touched, a memory, connected to said input, to store at least one of said position signals, a differentiator to detect time dependent transition properties between two different successive positions, a first evaluation circuit connected to said differentiator to determine, if a position following a preceding position is caused by a single point user input or by a dual point user input, a second evaluation circuit, connected to said input, said memory and said first evaluation circuit, wherein said second evaluation circuit is provided to calculate a dual point user input by reflecting a first input position at a successive second position, and an output, connected to said second evaluation unit, connectable to a processing unit.

10x10 matrix

Fig. 1

EP 2 267 589 A2

**Description**

The present invention relates to touch input devices for electronic devices. The present invention is also related to touch screen devices, such as PDAs, mobile telephones or handheld computers. The invention also relates to touch screens and more specifically to implementing a dual input on conventional single-point output touch pads.

Touch screens are used in increasing numbers in handheld electronic devices. Usually the user holds the device in one hand and uses the user interface of the device with the other hand. In certain situations, however, it might be useful to allow the user to use the UI with both hands. However, current resistive touch pads do not allow multiple input. If a user touches the touch pad with two fingers, the device handles this is an error and assumes that the user actually intended to press a point that is the middle point of a line that connects these two input points.

There are many electric devices that use touch pads for user input, such as PDA, mobile phones, laptop computers and PC monitors. Typically all of them allow only single point user entry on the user input area, such as pressing a graphical icon, a menu item or a drawing with a pen or stylus. However, there is a raising interest to utilize dual point user input in special cases, An example of this kind of use is a device that has a QUERTY-keyboard with special keys (shift, alt, ctrl, etc.) that must be pressed with another key. Another commonly used user interface feature is a drag & drop -feature that is not possible with current touch pad technologies as it typically requires a shift-key pressed down.

There are actually some touch pad technologies that are capable of detecting more than one input points simultaneously, but these are expensive, require too much operating power, processing power or memory for a mobile device.

It is therefore desirable to have a cheap touch based input device that can recognize a user input with two input points.

It is further desirable to enable a conventional touch pad that allows only a single point user input to recognize multiple point user input.

According to a first aspect of the present invention, there is provided a method for recognizing a dual point user input on a touch based user input device comprising the operations of receiving a first user input to said input device relating to a first position, forming a first position signal relating to said first user input, receiving a second user input to said input device relating to a second position, forming a second position signal relating to said first input and said second input, determining on the basis of said first position signal and said second position signal, if said second user input has its source in a simultaneous dual point user input, generating a third position based on said first position and said second position, and using said first and third positions, as the coordinates of said dual point user input.

In another aspect of the invention there is provided a method for recognizing a dual point user input on a touch based user input device, wherein said input device is only capable of outputting a single input position signal. That is the touch input device provides on every kind of input a related single position output signal, but there are different input situations possible that produce the same output signal. The method comprises forming or detecting a first position signal, preferably storing said position signal, forming or detecting a subsequent second position signal, determining, if said second position has its source in a simultaneous dual point user input, generating a third position by reflecting said stored first position at said second position, and using said first position and said third position, as the coordinates of a said dual point user input.

By forming a first position signal related to a first user input to said input device, it is supposed that a single point user input is detected on said touch based input device.

By preferably storing said first and third position signals, the position is made available, even if the input point has actually changed its position. Position signals can be stored in the form of a signal itself or e.g. in the form of e.g. binary coded coordinate data. It may be noted that the storing operation of the first use input position can be performed by using a transient memory, as it is known from persistent storage scope technology.

By preferably forming a second position signal that preferably differs from said first position and that is related to a subsequent second user input to said input device, an event is detected that may have been caused by a dual point user input or by a single point user input. To distinguish between the two possible user inputs, it is determined if said second position has its source in a simultaneous dual point user input. This determination can be performed by evaluating the properties of the signal transition from the first to the second position signal. This determination can be based on a differentiation between a substantially continuous and a substantially discontinuous signal transition from the first to the second position signal, wherein a substantially discontinuous signal transition indicates a dual point user input and a substantially continuous signal transition indicates single-point user input, i.e. a motion of the input point on the touch based input device.

If a dual point user input is detected, a third position is generated by (point) reflecting said stored first position on or upon said second position. Said first position and said third position, are then used as coordinates of a said dual point user input.

Preferably said generated third position is essentially the same location as the said second user input at said second position.

The point reflection operation of said first position at said second position visualizes the generation of said third point. The criteria for a dual-point user input is fulfilled, if said second position represents the 'center of mass' position of two actually pressed points on the touch based input device. With center of mass information (second position) and one of two points (i.e. first position), the third position can be calculated.

The third position can also be obtained by generating a difference signal between the stored first position and the second position, and adding said difference signal to the actual second position. This represents a signal-based generation of the third position. It is supposed that a generation of the third position by calculating the position coordinates of the positions is easier to implement.

For the above reasons, a device using this method can distinguish between user-input cases with a single pressing point or a dual pressing point. When the separation has been done, the method determines where the second input point is, as the hardware then produces incorrect data.

This first part of said method can be regarded as a static case, wherein the second point is not moving. The present invention can also be applied, if a movement of the second point is detected. By continuously reflecting the first point at the second (moving) point, a movement of the third point can be calculated. So the first point can serve as a reference point for generating the movement of the third point.

In another example embodiment of the present invention said determination, if said second position has its source in a simultaneous dual point user input, is based on the gradient between the first position signal and the second position signal which may be the gradient of the position signal from said first position to said second position. The gradient of the position refers to the time derivative of the position, and is proportional to the speed said point is moving. If the position signal rises up abruptly, the position signal becomes substantially discontinuous, and the gradient increases. A substantially discontinuous signal transition indicates a dual point user input and a substantially continuous signal transition indicates single-point user input, e.g. a motion of a single input point on the touch based input device. Instead of the gradient, the steepness of the signal within the transition area may also be used as a criterion to decide if the transition is discontinuous or not.

It may be noted that the first position should be stored while the position is substantially static. To implement this, the first position may be stored in a transient memory, to be available after a time period characteristic for a discontinuous signal transition. This timer period can be in the range below 1/10 second, which is the maximum estimated time required to set down a finger or an input actuator (e.g. a pen) on the touch pad.

In yet another example embodiment of the present invention said method comprises storing said third position. If said second position is stored, it can be used as a reference position to calculate a movement of the first position if a motion of said second position is detected.

In another example embodiment of the present invention said method further comprises detecting a motion of said second position, setting one of said first position or said third position as a point of reference, and calculating a motion of said position which is not said point of reference, by reflecting said point of reference of said second position. This represents a dynamic implementation of the method in dual point input mode in case a motion of the 'middle' point is detected. As set forth above, the touch pad can only detect the motion of the middle point or the 'center of gravity' of said dual-point user input. There is only one case in which a motion of the second point can be interpreted in an unambiguous way that is when one of the points can be regarded as fix.

To use one fix reference point, this reference point has to be stored. For input features as e.g. string, alt, caps lock and the like user input, the first position can be used as a reference point, as it can be assumed that the position used to press a 'string' input area on the touch screen is not likely to be moved.

In case of a 'drag-and-drop' user input, it is supposed that that a user first points to an object to be dragged, presses subsequently an input area to activate the 'drag and drop' function, and then moves the object. In this case it can be assumed that the position used to activate the drag and drop feature (i.e. the third position) is not moved on the touch screen, and therefore the calculated third position can be used as a fix reference position. It may be noted that the setting of the reference point may be performed before a motion of the second position is detected.

In another example embodiment of the present invention said method further comprises receiving a signal, which indicates if said first position or said third position is to be used as a point of reference. By receiving an information e.g. from a software application running on said user device, both kinds of input features can be implemented in a singe device or under a single application. In this case the application can decide on base of the actual positions of the dual point input, if the first or the third point should be regarded as a reference point.

It is also possible to principally select the point, which is positioned closer to the left side of the input device as the reference point. It is also possible to principally select the point, which is actually positioned closer to the right side as the reference point.

By using this right/left side reference point approach it can be taken into account that users tend to hold a touch enabled device in their non-dominant hand, and use their dominant hand to perform an input e.g. with a finger or a pen. A user can easily use the thumb of the non-dominant hand to tap on the touch-input device. As it can be expected that a user is either right handed or left handed, it can be expected that in case of a right handed user the point positioned closer to the left side is pressed by the thumb. Therefore it may be expected that the point closer to the left side can be used a s reference point. Thus, a natural way to control touch input based devices, is achieved by the combined movements of two points, such as the pen and the thumb.

In yet another example embodiment said determination, if said second position has its source in a simultaneous dual point user input, is based on boundary areas. The boundary areas are defined by possible input options and said first position. A dual point user input is excluded, if at least one of said second positions is detected to be outside of said at least one boundary area.

By using boundary areas, an input that shows a discontinuous signal but leads to a not acceptable or to a not interpretable second input signal can be excluded from being recognized as dual-point input. Thereby a number of possible input signals can be excluded from being recognized as a dual input from the beginning.

In another example embodiment said input area is defined by a 'half edge distance area' from said first position. A 'half edge distance area' around the first point can define a basic boundary area. If the second input position is detected outside of the half edge distance area, the second point would be calculated outside of the sensible area of the touch pad. So when calculating the position of the third point from a second point outside the half edge distance area, an invalid value is obtained. To prevent that faulty third points can occur, the second point is regarded as a single one point user input, if the distance between the first user input point and the second user input point gets too big. So a step longer than a usual one is interpreted as a single point user input. When using the half width boundary area ¾ of a possible new second user-input positions can be excluded from a double point user input. Therefore, the accuracy can be increased significantly.

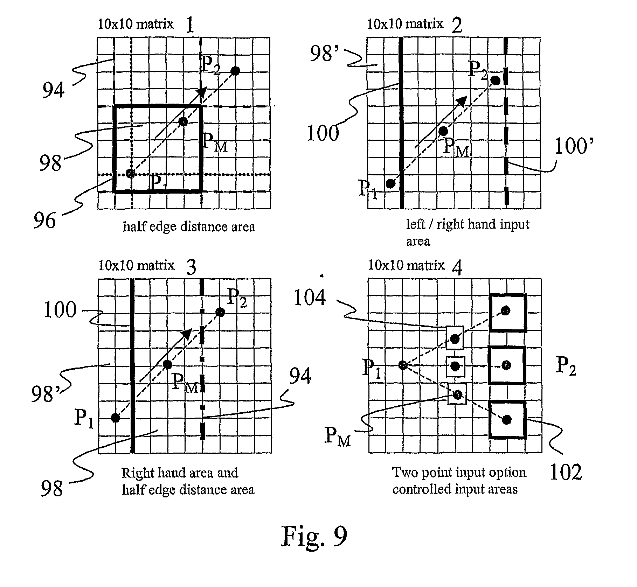

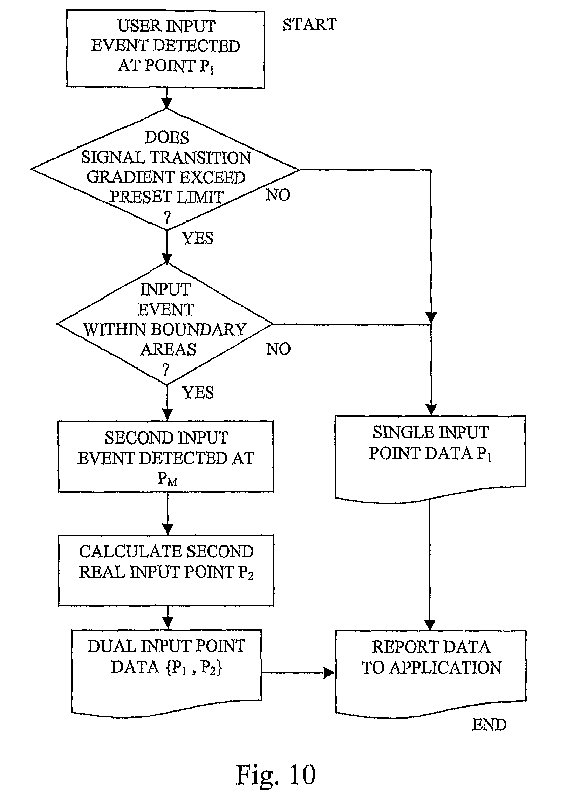

It maybe noted that the boundary areas may depend on the position of the first position, and therefore may have to be calculated. The boundary area concept can also be regarded as a kind of user input prediction, wherein the area in which a second use input is accepted as a dual-point input is reduced. By using boundary areas the reliability of the recognition and the operation of dual point user input can be significantly increased. For further implementations of boundary areas, see figures 9 and 10.

In yet another example embodiment of the present invention said method further comprises setting a 'dual point user input flag', if said second position input has its source in a dual point user input.

It can be useful if the device is capable of being aware if the touch pad is actually in a dual point input mode or not. The method can also comprise a 'dual point user input enabled'- flag that is send from a user application, to enable and disable a dual point user input on said touch based input device. The flag can be used to add constraints to the recognition of dual-point input, and thus can increase the accuracy of the recognition process.

In yet another example embodiment of the present invention said method further comprises using said second position as the actual position of a single point user input, if said dual point user input flag is set and if it is determined that said second position input has its source in a dual point user input.

Even in the dual point input mode the behavior of the movement of the second position can show a characteristic discontinuous transition behavior, when the user lifts of one of the two elements being in contact with the touch pad. In this case the reference point or the 'calculated' third position vanishes. If the calculated point vanishes, the calculated position or the second position is detected to return (continuously or discontinuously) to the reference point. Analogously, if the reference point vanishes this is indicated by a 'jump' of the second position to the calculated position or the calculated 'jump' of the calculated position to the reflection of the reference point at the calculated position. In this case the set flag can be de-set. If none of these two cases occur, a discontinuous move of the second position to a fourth position can be used to calculate fifth position, representing a third touch point on the touch pad. In this case it is to be noted that the new center of gravity position effects requires a different set of calculation equations than the generation of the third position, to take into account that the second position actually represents two points and not a single one.

The method can further comprise de-setting or re-setting of said dual point user input flag. The method can further comprise de-setting of said dual point user input flag, if no user input is detected. That is the flag can automatically be de-set, if the touch pad detects that the user is actually not touching the touch pad.

According to another aspect of the present invention, the method further comprises displaying an indication that the dual point user input is used. A user who is not aware of a dual user input option may be astonished or even frustrated, if the device reacts not in an expected way to a user input. Therefore it can be useful to indicate that the touch pad / screen is actually in a dual user input mode. An indicator, an inserted icon or a cursor displayed on a display of the device, may perform this. Cursors are actually not used in touch screen devices such as Personal Digital Assistants (PDAs), as the cursor would be positioned below the finger or the input actuator, and would therefore not be visible. In case of a dual point user input, it may happen that the 'reference point' is moved and so the cursor position can deviate from the contact position on the touch pad. A cursor can be used to indicate by its form, which of the two points is actually regarded as reference point. A cursor can provide a clue why the device reacts in a certain way. So even if a user is not aware how a dual point input is generated, the user can easily recognize where the actual cursor is located in the view of the device. The cursor can be implemented as a connection line between said reference point and said calculated point.

In another example embodiment said method further comprises setting said second position as the new position of an actual single point user input, if said second position input has its source not in a dual point user input.

According to yet another aspect of the invention, a software tool is provided comprising program code means for carrying out the method of the preceding description when said program product is run on a computer or a network device.

According to another aspect of the present invention, a computer program product downloadable from a server for carrying out the method of the preceding description is provided, which comprises program code means for performing all of the steps of the preceding methods when said program is run on a computer or a network device.

According to yet another aspect of the invention, a computer program product is provided comprising program code means stored on a computer readable medium for carrying out the methods of the preceding description, when said program product is run on a computer or a network device.

According to another aspect of the present invention a computer data signal is provided. The computer data signal is embodied in a carrier wave and represents a program that makes the computer perform the steps of the method contained in the preceding description, when said computer program is run on a computer, or a network device.

According to another example embodiment of the present invention a touch based input device controller for a touch based user input device is provided. Said input device is only capable of outputting a single input position signal that depends on the actual user input. The controller comprises an input that is connectable to said touch based user input device, a memory, a differentiator, a first and a second evaluation circuit and an output.

Said input is connectable to said touch based user input device, to receive successive position signals from said touch based user input device which a user has touched. Because of the restrictions of the touch based user input device, the input can only receive a singe point user input position signal. The input can also be implemented as an interface to said input device to supply the input device with power.

The memory is connected to said input, to store at least one of said received position signals. The memory can also be connected to one of said evaluation circuits to store a calculated position e.g. as a reference point. The memory is to be able to store a position signal at (at least) two different moments, wherein the need to store a first position is detected when the position signal has changed to a second position, and the first signal is not longer accessible. A transient memory can provide this. The memory can directly be connected to said input or indirectly via a signal pre-processing stage, such as said first or said second evaluation circuit. The memory can store said position signal as the signal itself or in a coded form such as parameters or coordinates.

Said differentiator is connected to detect time dependent transition properties between two different following positions, to determine e.g. the time gradient of transition and/or the transition time.

Said first evaluation circuit is connected to said differentiator to determine, if a position following a preceding position is caused by a single point user input or by a dual point user input. The first evaluation circuit can also be connected to said input. The differentiator can be incorporated in said first evaluation circuit. The first evaluation circuit is provided to determine if it is likely that dual-touch input is actually performed or not.

Said second evaluation circuit is connected to said input, to said memory and to said first evaluation circuit. Said second evaluation circuit is provided to calculate a dual point user input on the basis of a first input position and a successive second position. This may imply performing the calculations required to reflect a first input position at a successive second position.

Said output is connected to said second evaluation unit, and is connectable to a processing unit to put out said calculated a dual point user input to a application device, for providing an application with singe point and dual point inputs. Said output can also be implemented as an interface to said input device to be supplied with power by a connected application device.

In another example embodiment of the present invention said touch based input device controller further comprises an input connected to said second evaluation unit that is connectable to a processing unit to receive control information from said processing unit to control the operation of said second evaluation unit. The control information can comprise e.g. 'dual input enabled', or 'first/second position is reference point', or e.g. boundary area related information. The input controller can also be implemented integrally with a touch based input device such as a touch screen module or touch pad module. The input controller can also be implemented integrally in a touch screen controller.

According to another aspect of the present invention an electronic device is provided comprising a touch based input device, a processor and input controller connecting said touch based input device to said processor, wherein said input controller can provide a dual point user input according to the preceding description.

In another example embodiment said electronic device is a mobile terminal device. The terminal device can be embodied as a touch screen PDA, or a touch screen telephone.

In the following, the invention will be described in detail by referring to the enclosed drawings in which:

Figure 1 depicts a two point input and respective touch pad output in case a of conventional touch based user input device user interface,

Figure 2 depicts a track of a stylus moved on touch pad surface by a user,

Figure 3 shows the x-axis and y-axis signals caused by the movement of figure 2,

Figure 4 depicts a two point input and respective touch pad output in case of a conventional resistive user interface,

Figure 5 visualizes a signal discontinuity caused by a user touching a touch pad at a second input point,

Figure 6 visualizes the use of the signal raise time used as a judgement parameter between discontinuity or not -situation,

Figure 7 visualizes the process of reproducing the correct position data of two input points,

Figure 8 is a flow chart of an implementation of the method of the present invention,

Figure 9 depicts different embodiments of boundary areas of an implementation of the method of the present invention,

Figure 10 is a flow chart of another implementation of the method of the present invention using the boundary areas of figure 9, and

Figure 11 schematically depicts an implementation of a touch based input device controller for a touch based user input device.

It may be noted that the position points $P_1$, $P_2$ and $P_M$ used in the following description of the figures are represented by the first, second and third positions used in the text. The first position is represented by $P_1$, second position is represented by $P_M$ and the third position is represented by $P_2$.

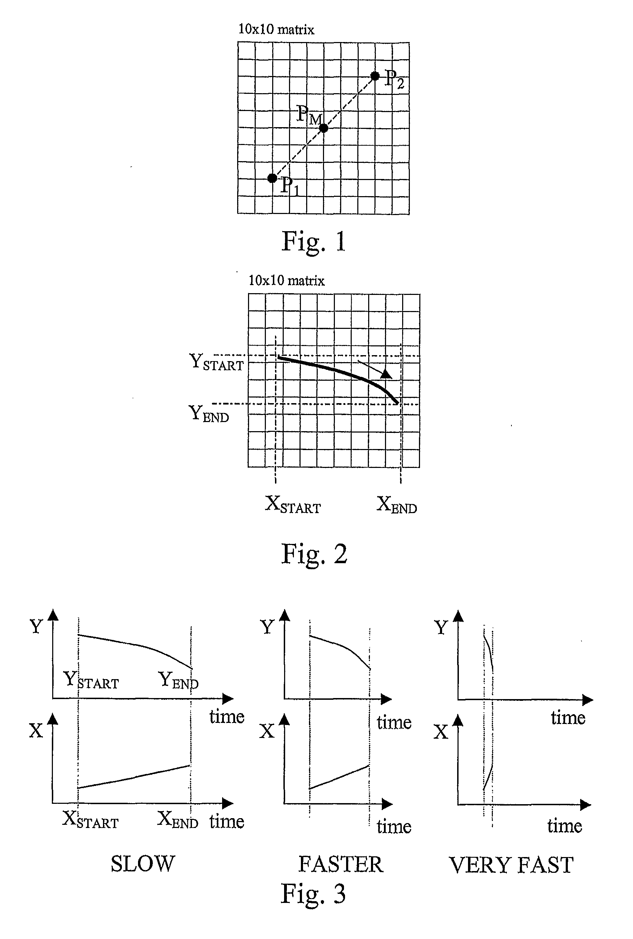

Figure 1, shows an input on a conventional electronic user input device such as a resistive touch pad that used by devices such as PDAs, mobile phones, laptop computers and PC monitors in an illustrative touch pad having a 10 x 10 matrix. Typical to all of them is that user input area allows only a single point user entry, such as a pressing a graphical icon, menu item or drawing with a pen or stylus. The resistive touch pad hardware behaves in a way that in a case of two pressed points the resistive properties of the input area converts the input into a signal indicating a single user input point in the middle of the actual user input points. When the two points $P_1$ and $P_2$ are pressed on the active input area, a conventional touch pad, (which is designed for single point entry) interprets the situation so that only one point $P_M$ is pressed in the middle of the interconnecting line between these two points. Therefore the hardware produces actually an incorrect signal.

In figure 2, a user is moving a stylus over a touch pad surface. In the example the stylus is drawn from a certain start position $X_{Start}$, $Y_{Start}$ to an end position $X_{End}$, $Y_{End}$.

In figure 3, the x-axis and y-axis signals caused by the movement along the track depicted in Figure 2 are shown. The different output signals represent different stylus moving speeds for a slow, a fast and a very fast movement of the stylus (from left to right). Although the speed varies the signal remains continuous, and no discontinuities occur.

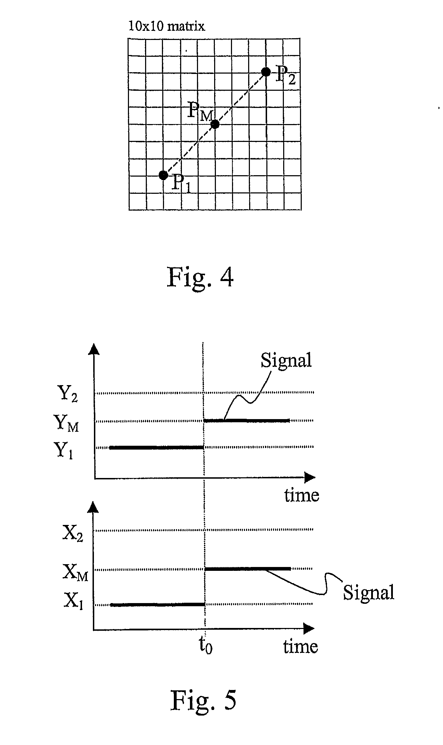

Figure 4 depicts a point input and respective touch pad output in case of conventional resistive user interface. The pressing of first point $P_1$ followed by a pressing of point $P_2$ is interpreted as a first point $P_1$ is pressed followed bay a pressing of point $P_M$ in the middle of the interconnecting line between $P_1$ and $P_2$.

There are essentially two phases that are used in dual point input detection and input:

1) detecting a dual point input (as separated from normal single point input), and
2) calculating the second real user input point.

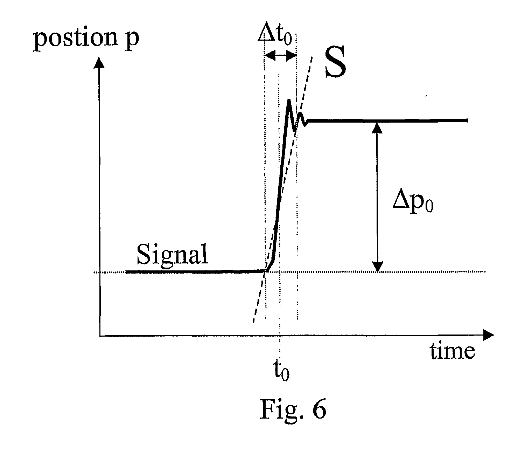

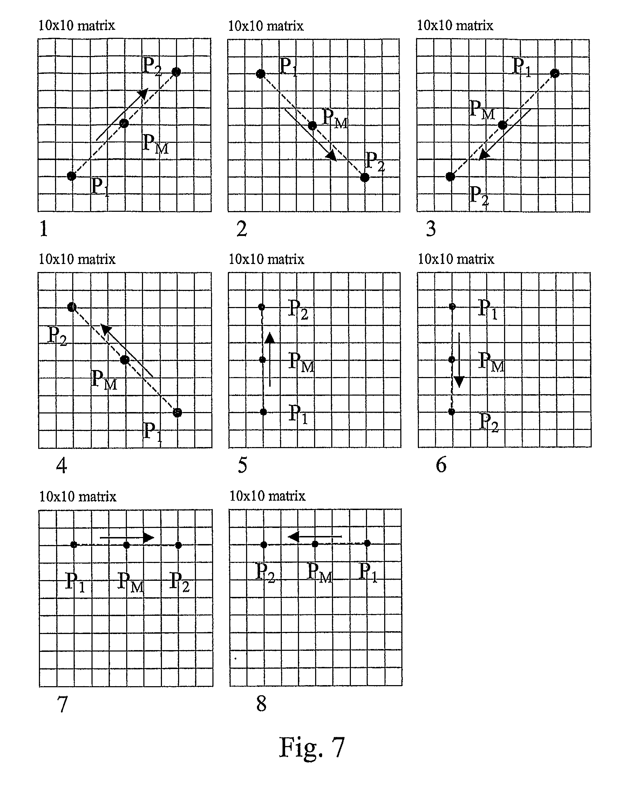

These phases can be used to implement the dual point user input and to produce two pairs of coordinates for these input points, which can then be used in UI applications. In the following figures 5 and 6 are related to the detection of a dual point input, and figure 7 is related to calculating the second real user input point.

Figure 5 depicts a discontinuous signal or a signal discontinuity caused by a second user input i.e. a user touching said touch pad at a second point. The signal changes very quickly in case that a second point on the touch pad is pressed. The signal transition time is primarily determined by the time a stylus or a finger needs from the first contact of the touch pad surface, until a certain pressure is built up. This time period can be estimated to be significantly below e.g. less than a 1/10 of a second. Compared to a typical stylus move, that which can be expected to require a time in the range of a few 1/10 of a second, the both signals can be distinguished. Therefore the signal rise time can be used as judgement parameter between a continuity situation and a discontinuity situation.

Figure 6 depicts a discontinuous signal raise time, in an enlarged time scale. The discontinuity evaluation can be applied to both X- and Y-coordinate values. It is sufficient to detect a discontinuity in one of the coordinates. In case that e.g. the point $P_1$ and $P_2$ have the same y coordinates a discontinuity can only be detected in the x-coordinate, and vice versa. In the depicted diagram the discontinuity can be described by two parameters, the signal rise time or transition time $\Delta t_0$ and by the gradient of transition S. The gradient of transition is proportional to the position change $p_0$ divided by transition time $\Delta t_0$, The larger the change is, the larger is the gradient of transition S. Both values can be applied to detect a discontinuity. Using only the transition time $\Delta t_0$ can lead to a situation in which a small position change (e.g. one digit) may be recognized as a discontinuity. The gradient of transition S has the advantage that for small position changes can automatically be regarded as continuous.

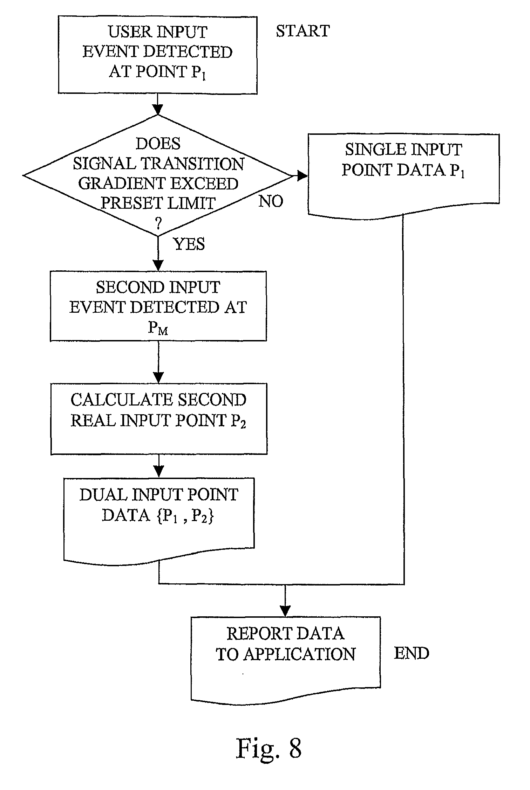

The dual point user input can be detected with the following procedure. As it was mentioned, the typical touch pad hardware produces a single input point data in normal use and also in a case where user presses two points. In order to be able to utilize the dual point input there must be a method how to separate these two cases from each other. This can be done via analyzing the time domain behavior of the hardware signal. In typical normal use, as user presses touch pad hardware with an input actuator (such as finger, stylus or pen) and therefore produces a signal interpreting the pressing point. The input point can also move while user is dragging the input actuator (by sliding, drawing, scrolling a menu, etc.). In all of these normal/typical cases, the hardware signal is continuous (see figure 3). The movement might be very fast but the signal remains always continuous. However, when an user touches the touch pad at a second position, this signal experiences an instant and very rapid discontinuity indicating that there must be an other input point present (see figure 5). This knowledge can be utilized by setting a limit for the signal change rate. The signal change rate is an expression that is common to electrical signal handling/processing art and describes the increase or decrease time of a signal. The change rate can be determined by signal edge detection, a Schmitt trigger, a high pass filter or by Fourier analysis with high frequency component detection, The determined signal change rate value can be used in judging if the input is made with single or dual presses. If the signal exceeds a given slope steepness the discontinuity is detected. The proper value for the limiting factor can be set based on usability studies so that he use of dual input touch pad is convenient and natural. Basically this is only a question of finding a feasible value for the limiting factor that is compatible with the natural way of humans using touch pads. The described process is illustrated by a flowchart in the figures 8 and 9. Naturally, this elementary process must be applied sequentially during input activity in order to have a continuous detection method.

Figure 7 visualizes the process of producing correct position data of two input points. When two points are pressed on active input area, the device (which is designed for single point entry) interprets the situation so that only one point is pressed in the middle of the interconnecting line between these two points (see figure 1 for illustration). If a two point input is detected, the first pressing point and the "faulty middle point" is known which is enough information to calculate the actual second pressing point as explained below:

$P_1 = \{X_1, Y_1\}$    first actual and detected user input point with coordinates
$P_2 = \{X_2, Y_2\}$    second actual user input point with coordinates
$P_M = \{X_M, Y_M\}$    second detected user input point with coordinates

As user is pressing two points, we know the first (and previous) pressing point $P_1$ and the incorrect middle point $P_M$, which is produced by faulty hardware interpretation of the actual input actuation. Together with the detected dual point input case (as explained in figures 5 and 6) there is enough information to calculate the actual second actual pressing point. First, the middle point $P_M$ for any two points $P_1$ and $P_2$ can be defined by...

$$X_M = X_1 + \frac{X_2 - X_1}{2} \qquad\qquad Y_M = Y_1 + \frac{Y_2 - Y_1}{2}$$

From these equations the correct actual position of the second user input point $P_2$ can be derived by...

$$X_2 = 2X_M - X_1 \qquad\qquad Y_2 = 2Y_M - Y_1$$

Thus, the first user input point $P_1$ is known and the second actual user input point $P_2$ can be calculated based on misinterpreted touch pad signal. Therefore correct data of a dual point user input points are available for user interface applications,

The following table illustrates the correct one to one relationship between $P_1$, $P_2$ and $P_M$. Enabling this calculation method to be used for any pair of user input points and with any combinations of relative positioning of them. Therefore the presented simple idea can be generalized to any size and shape of the touch screen displays or other touch sensitive areas.

**Samples with 10x10 matrix**

| | Matrix no. | First position $P_1$ | | second position $P_2$ | | middle point $P_M$ | |
|---|---|---|---|---|---|---|---|
| | | X | Y | X | Y | x | Y |
| Diagonal | 1 | 2 | 2 | 8 | 8 | 5 | 5 |
| | 2 | 2 | 8 | 8 | 2 | 5 | 5 |
| | 3 | 8 | 8 | 2 | 2 | 5 | 5 |
| | 4 | 8 | 2 | 2 | 8 | 5 | 5 |
| Vertical | 5 | 2 | 2 | 2 | 8 | 2 | 5 |
| | 6 | 2 | 8 | 2 | 2 | 2 | 5 |
| Horizontal | 7 | 2 | 8 | 8 | 8 | 5 | 8 |
| | 8 | 8 | 8 | 2 | 8 | 5 | 8 |

It may be noted that the positions can comprise more than one possible user input point, as the equations may lead to non-integer position values. The non-integer values may be avoided by interpolating the position values or by using a touch area instead of a second position. The position resolution of the second point is decreased, as the positioning error of the calculated third point $P_2$ is increased by a factor of 3.

The dual point user input can be used for new user interface features such as two item selection, shift/alt/ctrl functionality in on screen keypads, drag & drop, keyboard shortcuts, etc... in the case when resistive touch pad technology is used. The operation principle is simple and implementation requires only small modification into software (hardware driver module). The invention can also be implemented in a hardware module. The present invention allows the implementation of new user interface styles.

If the dual point input is activated and the middle point $P_M$ is moved, the one to one relationship is not longer existent. If e.g. the middle point moves one step to the right, it can principally not be determined if the user has moved each point a single step to the right or one of them two steps to the right. In some cases it is however possible to determine which was the actual user input.

One possibility resides in that always the first point is used as a fix reference point to calculate a movement of the second point according to the above equations. This possibility is very useful at the shift/alt/ctrl functionality, in on screen keypads, keyboard shortcuts, and all applications in which the first position is supposed to be stationary.

In case of the drag and drop feature, it is expected that a user first points to item and then activates the drag functionality by pressing a second point on a touch pad or the touch screen. In this case, the calculated second point is supposed to be stationary. In contrast to an ad hoc approach the calculated second point is fixed and the motion of the first point can be calculated from the movement middle point. This may simply be implemented e.g. by exchanging the first and second points before setting the reference point and calculating the movement.

Figure 8 is a flow chart of an implementation of the method of the present invention. The method starts with the detection of an input event at the position $P_1$. In the next step the position change rate is determined, e.g. by determining 82 if the change rate exceeds a predetermined value. If the change rate does not exceed this value the change is regarded as a conventional motion of the one-point user input at a point $P_1$. This is the case if the point $P_1$ remains static or is moved over the surface of the touch-input device. The point $P_1$ is then reported 84 to the application using said touch input device as a user interface.

If the change rate exceeds the threshold value, the change is regarded as a discontinuous motion or a 'jump' of the one-point user input. This if the jump is detected, a new input event is detected 88 at the point $P_M$. The points $P_1$ and $P_M$ are then used to calculate 90 a second input point $P_2$ analogue to the above equations. The new double or dual input points $\{P_1,P_2\}$ are generated 92 and reported 84 to the application using said touch input device as a user interface.

Figure 9 depicts examples of how boundary areas can improve the accuracy of the recognition of a two-point user input on a touch-input device. Boundary areas can be defined and used to exclude a number of falsely recognized two point user inputs. In figure 9 there are four different examples of boundary areas indicated in the 10x10 input matrices numbered 1 to 4.

In the matrix number 1 the point $P_1$ is positioned at near the lower left corner. If a discontinuous jump to the point $P_M$ is detected, the point $P_2$ can easily be calculated. If the point $P_M$ is instead detected e.g. at the position of $P_2$, a respective calculated point would be positioned outside and not inside the matrix. To prevent that the calculated points are positioned outside the matrix, a dual-point input may only be detected if the new point $P_M$ is detected within a boundary area 98 defined by the 'half edge distance' lines 94. The half edge distance lines 94 represent all points having equal distances to the edges of the touch pad and the first point $P_1$. A combination of all half-edge distance lines 94 represent the boundary 96 of the boundary area 98. By using a boundary area 98, tree quarters of the input area and therefore three quarters of the possible user inputs can be excluded from being recognized as possible dual point user input. A jump longer than a usual one (beyond the boundary area 98) excludes a dual point user input. It is to be noted that the position of this boundary area depends on the position of the first point $P_1$ and may have to be calculated.

In the matrix number 2 the point $P_1$ is also positioned to be near the lower left corner. The borderline 100 separates the border area 98' form the rest of the touch pad area. The border area 98' can contain user interface features such as the shift/alt/ctrl functionality, keyboard shortcuts, and the like. The border area 98' can be used as a boundary area for the point $P_1$, when shift/alt/ctrl functionality, keyboard shortcuts input areas (not depicted) are located within said area 98'. The boundary area 98' can be used for e.g. right-handed persons, wherein it is supposed that that right handed person uses his non-dominant left hand to hold the device and uses the left thumb to press the shift/alt/ctrl functionality, while the right hand wields an input pen.

In case of a left handed person said shift/alt/ctrl functionality input areas should be (analogously) located on the right-hand side of the touch-input device. This is indicated by the interrupted line 100'. In a preferred embodiment the electronic device offers a possibility to 'reverse' the contents of e.g. a touch screen display to enable left-handed persons to use the device in an optimized way. The left-hand right-hand reversal may be implemented in a user selectable settings / user profile menu.

In the matrix number 3 the right hand borderline 100 separates the border area 98' for point $P_1$ and combines it with a half edge distance area 98, defined between the lines line 94 and 100. The matrix number 3 enables the recognition of a dual point input only when the point $P_1$ is located within the area 98' and when the point $P_M$ is located within the area 98. That is there are two different position based constraints to enable an dual point user input, which in turn increases the accuracy of a the recognition of a dual point input.

In the matrix number 4 there are different input areas 102 provided representing each an input feature as known from drag & drop-feature or the activation of different input styles as known from drawing programs. The input areas 102 can e.g. define a drawing- or an eraser-functionality to the point $P_1$ actually touched by a pen. Assuming that at the point $P_1$ an input actuator is set onto the touch pad before an input on one of the input areas 102 is expected. When $P_1$ and the input areas 102 are known and the only performable dual-point input comprises an input to one of the input areas 102, the boundary areas 104 can be calculated. Dual-point input is then only enabled if and when a discontinuous jump into one of the boundary areas 104 is detected. If a movement of point $P_M$ is detected, the point $P_2$ within the input areas 102 are used as reference points to calculate the movements of $P_1$ from the movements of $P_M$.

In the matrix number 4 the number of possible dual point inputs are considerably reduced as compared with the conventional methods. The boundary areas 104 can be regarded as a kind of input prediction used to increase recognition accuracy of dual-point inputs.

I may be noted that the matrix 4 is embodied as a matrix for left handed users wherein the input areas 102 are operated by e.g. the thumb of the right hand, and therefore are located at the right side of the matrix 4.

Figure 10 is a flow chart of another implementation of the method of the present invention. Basically the method comprises the same steps as disclosed in figure 8, and therefore the similar steps are not described, but reference is made to the description of figure 8.

The method differs from the one disclosed figure 8 by an additional inquiry step 11 inserted after the detection 80 of an input event at the point $P_1$, to determine if the input event is detected within a boundary area. If the input event is not detected within said boundary area, it is presumed that the input is not caused by two-point user input, and that a single input is performed 84 at the new single input point.

If the input is detected within a boundary area, the second input is detected 88 at the point $P_M$ and the method proceeds as described in figure 8.

The present method can further comprise steps like determining input areas and calculating boundary areas to speed up the process.

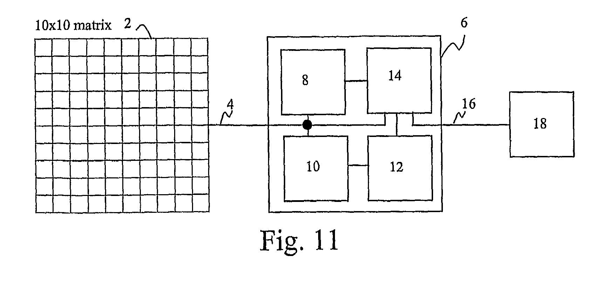

Figure 11 depicts schematically a touch based input device controller for a touch based user input device. Figure 11 comprises three blocks, a touch based input device 2 such as a touch pad or a touch screen, a touch pad input controller 6, connected via an interface 4 to said touch pad 2. The figure further comprises a processor 18 for running an application, which is to be controlled by user input via said touch pad 2. The controller 6 is connected to the processor 18 via an interface 16. The controller 6 comprises a memory 8, a differentiator 10 and first and second evaluation logic 12 and 14. In the controller 6 the differentiator 10 receives a single position signal from the touch pad 2 and determines the time derivative of the position signal, i.e. the speed at which the signal is moving on said touch pad 2. The determined value is transferred to the evaluation circuit 12, to determine if the change of the position signal exceeds a predetermined limit. If the limit is exceeded the signal is regarded as discontinuous, and a dual point user input is identified. The information that dual-point user input is present is transferred to the second evaluation circuit 14. The differentiator 10 and the evaluation circuit 12 are provided to determine if dual-point user input occurs or not. If dual-point user input is detected, the second evaluation circuit 14 is used to determine the two actual positions at which a user is expected to touch said touch pad 2.

The second evaluation circuit 14 uses a formerly stored first position stored in memory 8 and the actual position received via the interface 4 to calculate an actual dual point user input. To calculate both positions of an expected actual dual-point user input, the equations listed in the foregoing specification regarding figure 7 can be used. The second evaluation circuit 14 transfers the calculated dual point user input via the interface 16 to the processor 18 to control an application running on said processor.

The application running on said processor 18 may transfer control information via the interface 16 to the second evaluation circuit 14.

In this invention the behavior of touch pads that are capable of outputting only a single position information notwithstanding the number of actual input points or areas, as in the case of e.g. resistive touch pads is used to allow dual inputs. The invention is essentially a two-step process. First, a dual input situation is detected by monitoring the hardware signal. In the second step the actual second input point is calculated on the basis of the first input point and the middle point.

The present invention provides a simple method to allow dual input on touch pads that are designed for single input only, and provides therefore cheap possibility to implement dual input on existing touch based input devices. The present invention allows for the creation of new user interface features, that further improve usability of touch pad or touch screen enabled devices.

The method is based on novel way of resistive touch pad signal interpretation and the implementation can be made with software. Therefore, the innovation can be implemented with resistive touch pad devices or with any other touch pad technology that behaves similarly. One useful property of suitable touch pad technology is that when two points are pressed on active input area, the device (which is designed for single point entry) interprets the situation so that only one point is pressed in the middle of the interconnecting line between these two points. Basically, only an unambiguous signal and an unambiguous relation ship between a single pressed input point and two simultaneously pressed input points are actually required. In such a case the derivation of the third point $P_2$ may be more complicated.

The operation principle is simple and the implementation requires only small modifications in the software of a hardware driver module. The performance or quality of the new feature is easy to validate and therefore the development time in research and development is short.

The present invention can easily be implemented and tested. The present invention can be used in specific applications if the total user interface-style integration takes more time. The present invention can be implemented simply by software and does not require significantly higher processing power or memory. The present invention allows for new input concepts and redesigned user interface styles. The present invention allows the use of previously impossible user interface features with dual point user input while utilizing existing hardware technology.

It may be noted that the present invention although described only in the case of plane and rectangular touch input devices can also be applied to round, oval or e.g. circular or ring sector shaped touch input devices. It is also possible to implement the present invention in a curved or even spherical touch input device. In case of a non-euclidic touch sensor distribution, a corrector term can be used to implement the present invention.

It may also be noted that throughout the whole description the expression touch pad is used to denote any kind of touch based input devices such as touch pads, touch screens and touch displays.

It may further be noted that the present invention can also be applied to the detection of more than two user-input points. Starting from a two-point user input, and in case a second discontinuous signal transition is observed, the first middle point can be used to calculate third user-input point on the touch pad. A problem arising from said three-point input resides in a not unambiguous relation between a potential movement of the middle point of three points. In a three-point input it is not clear which of the tree point actually caused a motion of the actual middle point. But also there are some exceptions, a three-point user input such as can be a subsequent pressing of combination such as 'String-Alt-Del' known to any personal computer (PC) user to restart the PC.

This application contains the description of implementations and embodiments of the present invention with the help of examples. It will be appreciated by a person skilled in the art that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims. Consequently various options of implementing the invention as determined by the claims, including equivalent implementations, also belong to the scope of the invention.

According to some, but not necessarily all, embodiments of the invention there may be provided a method for recognizing a dual point user input on a touch based user input device, comprising

- receiving a first user input to said input device relating to a first position
- forming a first position signal relating to said first user input,
- receiving a second user input to said input device relating to a second position,
- forming a second position signal relating to said first input and said second input, determining on the basis of said first position signal and said second position signal, if said second user input has its source in a simultaneous dual point user input,
- generating a third position based on said first position signal and said second position signal, and using said first and third positions, as the coordinates of said dual point user input.

Said generated third position may be essentially the same location as the said second user input at said second position.

Said determination may be based on the gradient between the first position signal and the second position signal.

The method may further comprise: - storing said first and third positions.

The method may further comprise: - detecting a motion of said second position,

- setting one of said first position or said third position as a point of reference, and
- calculating a motion of said position that is not said point of reference, by reflecting said point of reference on said second position.

The method may further comprise receiving a signal indicative if said first position or said third position is to be used as a point of reference.

If said second position has its source in a simultaneous dual point user input, said determination may be based on at least one boundary area defined by possible input options and said first position. Dual point user inputs may be excluded if said second position is not detected to be within one of said boundary areas.

Said boundary area may be a half edge distance area from said first position.

The method may further comprise setting a dual point user input flag, if said second position input has its source in a dual point user input.

The method may further comprise: - using said second position as the actual position of a single point user input, if said dual point user input flag is set and if it is determined that said second position has its source in a simultaneous dual point user input.

The method may further comprise displaying an indication that the dual point user input is used.

The method may further comprise: - setting said second position as the new position of an actual single point user input, if said second position input has not its source in a dual point user input.

Said input device may be capable of only outputting a single input position signal that depends on the actual user input.

The method may further comprise storing said first position signal.

Said second position may be differing from said first position.

According to some, but not necessarily all, embodiments of the invention there may be provided a software tool comprising program code means stored on a computer readable medium for carrying out the method as described above, when said software tool is run on a computer or network device.

According to some, but not necessarily all, embodiments of the invention there may be provided a computer program product comprising program code means stored on a computer readable medium for carrying out the method as described above, when said program product is run on a computer or network device.

According to some, but not necessarily all, embodiments of the invention there may be provided a computer program product comprising program code, downloadable from a server for carrying out the method described above, when said program product is run on a computer or network device.

According to some, but not necessarily all, embodiments of the invention there may be provided a touch based input device controller for a touch based user input device, comprising:

- an input connectable to said touch based user input device to receive successive position signals each representing a position on said touch based user input device, which a user has touched,
- a memory, connected to said input, to store at least one of said position signals,
- a differentiator to detect time dependent transition properties between two different successive positions,
- a first evaluation circuit connected to said differentiator to determine, if a position following a preceding position is caused by a single point user input or by a dual point user input,

- a second evaluation circuit, connected to said input, said memory and said first evaluation circuit, wherein said second evaluation circuit is provided to calculate a dual point user input on the basis of a first input position and a successive second position, and
- an output, connected to said second evaluation unit, connectable to a processing unit.

The touch based input device controller may further comprise: an input connected to said second evaluation unit, connectable to a processing unit to receive control information from said processing unit to control the operation of said second evaluation unit.

According to some, but not necessarily all, embodiments of the invention there may be provided an electronic device comprising a touch based input device, a processor and controller connecting said touch based input device to said processor, **characterized in that** said controller is a controller as described above.

The electronic device may be a mobile terminal device.

**Claims**

1.   Method for user input on a touch screen user input device (2), comprising

- receiving a first user input to said input device (2) relating to a first position
- forming a first position signal relating to said first user input,
- receiving a second user input to said input device (2) relating to a second position,
- forming a second position signal relating to at least said second input,
- determining the first and second position signals as dual point user inputs when a position change rate between the first and second positions exceeds a predetermined value; and
- determining the first and second position signals as motion of a user touch input point on the touch screen input device when a transition from the first position signal to the second position signal is a continuous signal transition.

2.   A method as claimed in claim 1, further comprising: generating a third position based on said first position signal and said second position signal, and using said first and third positions, as the coordinates of said dual point user input.

3.   Method according to claim 2, further comprising - detecting a motion of said second position, - setting one of said first position or said third position as a point of reference, and - calculating a motion of said position that is not said point of reference, by reflecting said point of reference on said second position.

4.   Method according to any of the preceding claims, wherein determining the first and second position signals as dual point user inputs, is based on at least one boundary area, defined by possible input options for the second position, and by said first position, wherein dual point user inputs are excluded if said second position is not detected to be within said boundary area.

5.   Method according to claim 4, wherein said boundary area is defined at a distance half way between an edge of the touch screen user input device (2) and said first position.

6.   Method according to any of the preceding claims, further comprising setting a dual point user input flag, if said second position input has its source in a dual point user input.

7.   Method according to claim 6, further comprising: - using said second position as the actual position of a single point user input, if said dual point user input flag is set and if it is determined that said second position has its source in a simultaneous dual point user input.

8.   Method according to any of the preceding claims, further comprising: - setting said second position as the new position of an actual single point user input, if said second position input has not its source in a dual point user input.

9.   Method according to any of the preceding claims, wherein said input device is resistive and capable of only outputting a single input position signal that depends on the actual user input.

10.   Method according to anyone of the preceding claims, wherein the first and second position signals are determined as dual point user inputs when a transition from the first position signal to the second position signal is a discontinuous signal transition and also the second position is within a boundary area, dependent upon the first position; and the first and second position signals are determined as single point user inputs when the transition from the first position signal to the second position signal is a discontinuous signal transition and also the second position is not within a boundary area, dependent upon the first position.

11. A computer program for carrying out the method of anyone of claims 1 to 10, when said program product is run on a computer or network device.

12. Apparatus comprising:

a touch screen user input device (2) for receiving a first user input relating to a first position and for receiving a second user input relating to a second position,
means for forming a first position signal relating to said first user input,
means for forming a second position signal relating to at least said second input,
means for determining the first and second position signals as dual point user inputs when a position change rate between the first and second positions exceeds a predetermined value; and
means for determining the first and second position signals as motion of a user touch input point on the touch screen input device when a transition from the first position signal to the second position signal is a continuous signal transition.

13. Apparatus comprising:

means for determining a first position signal, for a first user input at a first position, and a second position signal, for a second user input at a second position, as dual point user inputs when a position change rate between the first position and the second position exceeds a predetermined value; and
means for determining the first and second position signals as motion of a single user input point when a transition from the first position signal to the second position signal is a continuous signal transition.

14. Method for recognizing a dual point user input on a touch screen user input device (2), comprising

- receiving a first user input to said input device (2) relating to a first position
- forming a first position signal relating to said first user input,
- receiving a second user input to said input device (2) relating to a second position,
- forming a second position signal relating to at least said second input,
- determining on the basis of said first position signal and said second position signal:

the first and second position signals as:

dual point user inputs when a position change rate between the first and second positions exceeds a predetermined value; and
as single point user inputs when the position change rate between the first and second positions does not exceed the predetermined value, the first and second position signals for single point user inputs being determined as motion of the user touch input point on the touch screen input device when a transition from the first position signal to the second position signal is a continuous signal transition.

15. Touch screen input device controller (6) for a touch screen user input device (2), comprising,

- an input (4) connectable to said touch screen user input device (2) to receive a first position signal and a second different successive position signal representing first and second different positions on said touch screen user input device (2), which a user has touched,
- a memory (8), connected, to store at least one of said first and second position signals provided by said input (4),
- a differentiator (10) to detect time dependent transition properties between the first and second positions,
a first evaluation circuit (12) connected to be responsive to said differentiator to determine, if the second position following the preceding first position is caused by a single point user input or by a dual point user input,
- a second evaluation circuit (14), connected to be responsive to said input (4), said memory (8) and said first evaluation circuit (12), wherein said second evaluation circuit (14) is provided to calculate a dual point user input on the basis of a first input position and a successive second position, and
- an output (16), connected to said second evaluation unit (14), connectable to a processing unit (18),

wherein the first and second position signals are determined as dual point user input when a position change rate between the first and second positions exceeds a predetermined value, and

the first and second position signals are determined as single point user inputs when the position change rate between the first and second positions does not exceed the predetermined value, the first and second position signals for single point user inputs being determined as motion of the user touch input point on the touch screen user input device (2) when a transition from the first position signal to the second position signal is a continuous signal transition.

10x10 matrix

Fig. 1

10x10 matrix

$Y_{START}$

$Y_{END}$

$X_{START}$          $X_{END}$

Fig. 2

Y

$Y_{START}$          $Y_{END}$

time

X

$X_{START}$          $X_{END}$  time

SLOW

Y

time

X

time

FASTER

Y

time

X

time

VERY FAST

Fig. 3

10x10 matrix

$P_2$

$P_M$

$P_1$

## Fig. 4

Signal

$Y_2$

$Y_M$

$Y_1$

time

$X_2$

$X_M$

$X_1$

Signal

$t_0$     time

## Fig. 5

Fig. 6

10x10 matrix

10x10 matrix

10x10 matrix

1

2

3

10x10 matrix

10x10 matrix

10x10 matrix

4

5

6

10x10 matrix

10x10 matrix

7

8

Fig. 7

USER INPUT
EVENT DETECTED
AT POINT $P_1$

START

DOES
SIGNAL TRANSITION
GRADIENT EXCEED
PRESET LIMIT
?

NO

SINGLE INPUT
POINT DATA $P_1$

YES

SECOND INPUT
EVENT DETECTED AT
$P_M$

CALCULATE SECOND
REAL INPUT POINT $P_2$

DUAL INPUT POINT
DATA $\{P_1, P_2\}$

REPORT DATA
TO APPLICATION

END

Fig. 8

10x10 matrix  1

94

98

96

half edge distance area

10x10 matrix  2

98'

100

100'

left / right hand input
area

10x10 matrix  3

100

98'

98

94

Right hand area and
half edge distance area

10x10 matrix  4

104

94

102

$P_1$  $P_M$  $P_2$

Two point input option
controlled input areas

Fig. 9

START

USER INPUT
EVENT DETECTED
AT POINT $P_1$

DOES
SIGNAL TRANSITION
GRADIENT EXCEED
PRESET LIMIT
?

NO

YES

INPUT
EVENT
WITHIN BOUNDARY
AREAS
?

NO

YES

SECOND INPUT
EVENT DETECTED AT
$P_M$

SINGLE INPUT
POINT DATA $P_1$

CALCULATE SECOND
REAL INPUT POINT $P_2$

DUAL INPUT POINT
DATA {$P_1$ , $P_2$}

REPORT DATA
TO APPLICATION

END

Fig. 10

10x10 matrix  2

6

8

14

4

16

18

10

12

Fig. 11